# EUROPEAN PATENT APPLICATION

(11) **EP 4 841 611 A1**
(43) Date of publication of application: **18.11.2026**
(21) Application number: 25176439.5
(22) Date of filing: 14.05.2025
(51) Int. Cl.: G09B 23/28, G09B 23/30, G09B 23/34

(54) **MODEL OF A NEWBORN BODY, IN PARTICULAR FOR MEDICAL TRAINING IN MINIMALLY INVASIVE SURGERY, SIMULATOR WITH SAID MODEL AND METHOD OF PREPARATION OF THE MODEL**

(71) Applicant: Univerzita Komenskeho V Bratislave, 814 99 Bratislava (SK); Ustav polymerov Slovenskej akademie vied, verejna vyskumna institucia, 845 41 Bratislava - Karlova Ves (SK)
(72) Inventor: Zahradníková, Petra, 831 52 Bratislava (SK); Spitálsky, Zdenko, 841 07 Bratislava (SK); Babala, Jozef, 811 03 Bratislava (SK); Hnilicová, Silvia, 831 01 Bratislava (SK); Vitovic, Pavol, 841 05 Bratislava (SK); Tvrdon, Tomás, 900 24 Ve ký Biel (SK)
(74) Representative: Porubcan, Róbert

(57) **Abstract**

The torso (1) includes a skeleton component made of a solid material embedded in a fabric component made of a flexible material. Inside the torso (1) there are several internal organs (2) in anatomical positions and the torso (1) has the size and shape of a newborn's torso. The internal organs (2) are made of a flexible material, the compressive modulus of elasticity and the tensile strength limit of which correspond to the mechanical properties of the respective organ in the body of a newborn. The mechanical parameter is set according to the value measured on the torso and/or on the internal organ of an animal, preferably a rabbit weighing 3,5 kg to 6 kg. By measuring the samples, the mechanical parameters of the actual internal organs are determined, by scanning the dimensions and shape of the torso and internal organs of the pediatric patient, then a composite torso (1) is manufactured and the internal organs (2) are placed inside the torso (1), the mechanical parameters of which are set by mixing the material components to achieve values according to the measurements of the actual organs. The internal organ (2) is preferably a cast of gelatin methacryloyl or polyacrylamide hydrogel.

## Description

### Field of technology

The invention concerns a simulator with a model of a newborn body for medical training, mainly for training in minimally invasive surgery (MIS). The torso of a newborn body is similar to a full-term newborn in terms of anatomical arrangement, size of intra-thoracic, intra-abdominal soft and bone structures, and mechanical properties of internal organs. The invention provides a synthetic 3D printed newborn body model for faithfully simulating conditions during a surgical procedure.

### Prior state of the art

MIS is used in many surgical disciplines, whereby simulators for training surgical procedures on adult body models are known. MIS training simulators are not specifically developed for children, training is carried out by inserting the relevant pathology, for example, a congenital developmental childhood defect, into a general simulator designed to work with an adult body model or adult torso, but the training environment does not correspond to the complex conditions of a newborn or infant.

Human torso models are known from the prior art, for example publication CN2503554Y describes a simulation model of an adult human torso with a realistic arrangement of internal organs, which serves scientific and training purposes. Similarly, the invention described in document KR100905057B1 represents a model of the human body, the outer part of which is covered with artificial skin and the abdominal cavity is openable, while segments of individual internal organs are arranged inside the model and fixed by magnetic force.

Newborn models for teaching are also known. CN117079530 describes a newborn teaching model that includes a head and a body. The external parts are made of transparent materials and the model includes a simulated airway. The body model is equipped with a sternum and the cavity of the model contains a lung sac (pleural sac) and a digestive sac. Such a model is applicable neither for MIS training, nor for training other surgical procedures, since the internal organs in the torso do not behave similarly to real organs during surgery.

The use of synthetic materials in the production of models of internal organs which have similar tactile properties compared to real internal organs is also known. For example, polyacrylamide hydrogel is used in the invention according to publication US2011200977, which describes a cannulation simulator. The simulator includes a part of the hand that has a surface zone for cannulation (insertion of cannula). The zone is made of a transparent polymer material, and this material resembles human tissue in its mechanical properties.

All known inventions and technical solutions are insufficient for training of MIS on newborns and infants, and therefore a new simulator solution with a model that, through its material design, construction, placement and behavior of internal organs, will simulate the real body of a newborn or infant as realistically as possible is desired.

### Essence of the invention

The abovementioned deficiencies are significantly remedied by a model of a newborn body, mainly for medical training in minimally invasive surgery, which has a torso and internal organs, where the torso includes a skeletal first component made of a solid (rigid) material cast into a fabric second component made of a flexible material, wherein inside the torso there are several internal organs in anatomical positions and the torso and/or internal organs have the size of the torso and/or the internal organs of a newborn and are shaped like the torso and/or the internal organs of a newborn, according to the present invention, an important feature of which is that the internal organs are made of a flexible material whose modulus of elasticity in compression and the tensile strength limit of which correspond to the mechanical properties of the relevant organ in the human body, or in the body of a newborn. The first component in the torso represents bones, the second component in the torso simulates a tissue or a muscle component.

The terms "torso", "internal organ", "skeleton", "tissue" are to be understood in this text as the names of the relevant parts of the model; these terms do not refer to real human organs unless explicitly stated as "an internal organ in the human body" or as "a real internal organ". For example, the term "spleen" does not refer to a real spleen made of biological material, but refers to a spleen model made of a flexible material that has a compressive modulus and tensile strength approximately the same as the spleen organ in the human body, or in the body of a newborn.

The prior art includes torso models or full-body models of a newborn or, more generally, adult models, which consist of multiple organs inside and are used for teaching anatomy or resuscitation training. The present invention uses models of individual or all internal organs so that they behave at least approximately like organs in the human body during invasive surgery training, that is, mainly, that they resist compression and rupture when a certain force limit is exceeded. A certain degree of compression of internal organs in contact with a surgical instrument is a concomitant phenomenon in invasive surgery and laparoscopic surgery, where local compression of the internal organ creates space for guiding the instrument. The model of a newborn body according to the present invention has internal organs placed side by side in the torso in the correct anatomical position, and does not have artificially created gaps for guiding instruments, but the internal organs touch each other. Therefore, it is important that internal organs are made of a flexible material that has a compressive modulus corresponding to the internal organ in question. The modulus of elasticity is the ratio of compressive stress to deformation.

At the same time, it is important that the tensile strength limit, at least on the surface of the internal organ model, corresponds or at least approximately corresponds to the tensile strength limit of the relevant organ in the human body, or in the body of a newborn, respectively. This creates an environment inside the torso that is sensitive to exceeding forces and mechanical stresses leading to damage to the relevant internal organ. The compressive modulus delimits the lower limit of the forces with which the surgeon must act on the instruments to create a gap or space sufficient for guiding the instrument; the tensile strength limit delimits the upper limit of the forces at which the surgeon will cause damage to the internal organ, which is naturally an undesirable outcome of the procedure.

The basic mechanical parameters of the internal organs and also the torso correspond to the real internal organs of the child's body with a deviation of up to 80%, preferably with a deviation of up to 50%, particularly preferably with a deviation of up to 25%. Such a deviation may seem large, but it is fundamentally smaller than the difference in the mechanical properties of the previously known models made of solid materials, which were used only for teaching anatomy. At the same time, it is suitable if the deviation of the mechanical parameters is chosen so that the model leads to training with greater safety. This means that the tensile strength limit of the internal organ in the model can be chosen with a tolerance in the range below the tensile strength limit of the real internal organ in the body of a newborn. The environment inside the torso with internal organs that have mutually different mechanical parameters, while these mechanical parameters at least approximately correspond to the real internal organs, creates the correct haptic or tactile feedback during training on the model.

In addition to the two basic mechanical parameters - compressive modulus and tensile strength - it is advantageous if models of internal organs also behave in other mechanical and rheological parameters in the same or similar way as real internal organs. These parameters may include: tensile modulus (Young's modulus), relative elongation at the limit (at break), material viscosity, shear modulus, bulk modulus, and static and/or moving friction coefficient.

The term "newborn" in this document should be understood as a designation of the size of the model, which may also correspond to a child after the 28th day of birth. In essence, the model can be created according to the dimensions and shapes of a child up to the end of the first year of life.

Determining the mechanical parameters of the internal organs of a newborn, which is necessary for the correct adjustment of the model materials, is problematic. In most countries where the protection of this invention is sought, it is considered unethical or even illegal to measure mechanical parameters on the body of a dead newborn. With the passage of time from the moment of death, the mechanical parameters of the biological material change irreversibly. The method according to this invention involves the use of a freshly ethically killed laboratory rabbit or several rabbits weighing 3,5 kg to 6 kg, while the measurement and analysis of mechanical parameters is carried out immediately after killing. For example, a team of surgeons removes the following organs: spleen, liver, pancreas, kidneys, diaphragm, small intestine, large intestine, duodenum, stomach, esophagus, lungs and trachea. The measurement team removes several samples from the internal organs and analyzes them using a measuring device, for example, a single-axis force analyzer, which records the course of force and distance when compressing the sample. From several samples of one internal organ, or from several internal organs of different individuals, the measured mechanical parameter can be determined with an acceptable margin of error. The measurements described in example 1 led to a finding that the mechanical parameters of individual organs are fundamentally different, which also corresponds to the empirical experience of doctors in surgical procedures.

In addition to surrogate measurement of mechanical parameters on the internal organs of an animal that approximately corresponds to a child's body in terms of thoracic and abdominal cavity volume and total weight, measurements can be performed on the body of a deceased child in countries where this is considered legal and ethical, with the aim of achieving the earliest possible removal and analysis of internal organs after death.

After determining the required mechanical parameters of the internal organs, synthetic mixtures are designed for individual models of internal organs so that their resulting mechanical parameters reach the values required for a specific internal organ. Preferably, the internal organs are cast into molds created as a negative model of the relevant internal organ, using synthetic hydrogels that have properties scalable by choosing the ratio of input components. The examples describe the use of gelatin methacryloyl (GelMA) and polyacrylamide (PAam) hydrogel. Gelatin methacryloyl is preferably used for casting the pancreas, colon, liver, diaphragm, and so on. Polyacrylamide hydrogel is preferably used for casting the lungs, spleen, liver, kidneys, and so on. It is also possible to use other synthetic materials, or other hydrogels, preferably those whose curve of dependence of mechanical parameters on the ratio of input components is reliably known and stable in the long term, particularly preferably if the curve is linear or quasi-linear. The compressive modulus of gelatin methacryloyl (GelMA) is scaled by choosing the weight to volume ratio of the lyophilized GelMA macromere. The compressive modulus of polyacrylamide (PAam) hydrogels is adjusted by choosing the amount of water in the reaction mixture.

Determining mechanical parameters is important for the correct choice of materials for internal organs; the present invention provides an ethically acceptable procedure for their determination using a proxy measurement on the body of an ethically killed animal. To determine the correct shape and anatomical position, non-invasive spatial imaging of a real newborn, such as CT scanning (CT - computed tomography, or computed axial tomography), is preferably used, when the inside of the human body is visualized using X-rays.

Another aspect of the invention involves spatial imaging of a newborn with a pathology that corresponds to the desired purpose of simulator training. The congenital defect (birth defect) is spatially imaged and then an internal organ is produced as a model with the corresponding congenital defect. For countries where this is necessary, parental and/or ethical authority consent may be required. Typically, pathologies suitable for training are gastrointestinal and thoracic tracts.

In one of the preferred embodiments, the torso is made in an inflated state, which corresponds to the creation of capnoperitoneum, as in a real firstborn during laparoscopic surgery. This means that the dimensional and shape data of the torso, in particular the spatial arrangement of the anterior abdominal wall, are obtained from spatial imaging of the newborn during the operation, or during the phase with artificially created overpressure, respectively. Thanks to this, the model represents a realistic stage even without the need to create overpressure during simulation and training. This does not rule out the possibility that the model has an uninflated shape and is brought into the capnoperitoneum state by means of gas overpressure.

In another aspect, the torso surface includes an entrance or multiple entrances for insertion of ports (working instruments). Multiple entrances for training various surgical procedures may be color-coded. Internal organs such as intestines, liver, spleen, pancreas, kidneys may be attached by a silicone membrane or synthetic vascular sling to the root of the synthetic panel, thereby simulating the environment of a real newborn, radix mesenterii.

The skeletal (skeleton) component contained in the torso has a shape and size corresponding to the actual shape and size of the bones in the body of a newborn. The skeletal component is made of a solid (rigid) material, preferably made by 3D printing, in which the data obtained and processed from computed tomography can be used. The skeletal component is subsequently cast in a flexible material in a mold that captures the shape and size of the newborn's torso. This connection creates a composite torso structure (a combination of FDM [Fused Deposit Modeling] 3D printer and silicone pouring), which behaves like a newborn's body during training. A mold created by 3D printing is preferably used for casting the flexible material, which reduces production costs and speeds up mold preparation, but another type of mold is not ruled out either. Similarly, molds created by 3D printing according to spatial data from CT scans are suitable for creating models of internal organs. The torso is designed so that it can be opened later after the simulator is assembled, and so that the internal organs can be replaced or rearranged if necessary.

The internal organs are placed in the torso in precise anatomical positions. The internal organs can be attached with magnets to the lower part of the torso or to the base on which the torso is placed. Magnetic force can also be used in an arrangement where the internal organs include a magnetic foil on the surface or magnetic powder, which creates an attraction of the internal organs to each other or to the body of the torso.

The newborn body model may in another aspect include at least one sensor located on the surface of the torso and/or inside the torso and/or on the surface of internal organs and/or inside internal organs. The sensor is adapted to detect and evaluate the movement of the hands of the trainee and/or the movement of instruments. The sensor may evaluate the presence, speed, acceleration or other accompanying phenomenon of work on the simulator. Data from the sensor, preferably from multiple sensors, are processed, evaluated and eventually also displayed to analyze the movements of an individual, but also groups of surgeons. Machine learning, Al and so on may be used for the evaluation.

The subject matter of the application is also the protection of a process that includes the aforementioned steps of manufacturing and preparing a unified, synthetic model of a newborn body. The manufacturing method includes imaging the child's body, determining the required mechanical parameters of the internal organs and subsequent manufacturing, which preferably includes additive 3D printing of the skeletal component, casting of the fabric component and casting of the internal organs from synthetic materials.

The subject of the claimed scope of protection is also a simulator in which a model of a newborn body is placed, in particular for medical training in minimally invasive surgery according to the abovementioned description. The simulator further includes instruments for the relevant medical procedure. Preferably, the simulator also includes a small-diameter camera, which is connected to a display element, for example in the form of a computer with a display.

The synthetic newborn body model and the simulator with the model according to the present invention enable training of MIS procedures in young children, newborns, where surgeons lack skills, since the small number of cases makes it impossible for surgeons to learn by practice alone. The present invention brings the possibility of faithful simulation without ethical problems in training and manufacturing models. An important advantage is the creation of correct haptic and tactile feedback during training on the model.

### Description of drawings

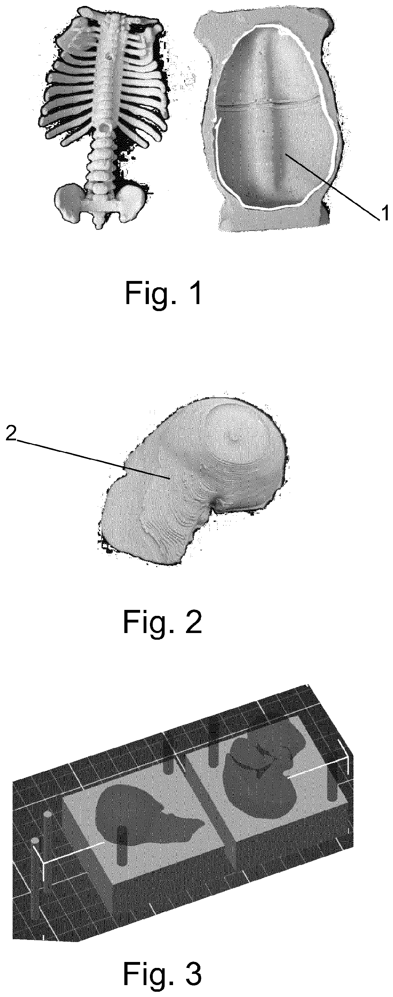

The invention is further disclosed by means of figures 1 to 8. The shapes and relative sizes of the torso and internal organs shown, as well as the pathologies shown, are illustrative and cannot be considered as limiting the scope of protection.
Figure 1 shows a photograph of a torso section. The left section shows a skeletal component created by additive 3D printing. The right section shows a torso section where the skeletal component is cast into a composite structure.
Figure 2 is a liver model made by casting into a mold. The two-part casting mold is shown in Figure 3.
Figure 4 shows the dependence of the compressive modulus on the weight-to-volume ratio of the lyophilized GelMA macromere.
Figure 5 shows the value of the compressive modulus for polyacrylamide (PAam) hydrogels as a function of the amount of water in the reaction mixture.
Figure 6 shows the congenital pathology of duodenal atresia.
Figure 7 shows a section of the torso during the insertion of the internal organs.
Figure 8 shows the skeletal component of the torso.

### Examples of realization

### Example 1

The body of the newborn was scanned by computed tomography and the image was segmented into layers using 3DSlicer software. The resulting .stl file represents a 3D model of the physiological body of the newborn. The .stl file was then edited in Blender3D program. The resulting .stl format was shared with a Prusa i3 MK3S printer for additive 3D printing, where the bone parts of the newborn and the abdominal cavity were created from PLA material. The bone parts form the skeletal component in the composite structure of torso 1 and are subsequently cast in a mold with a flexible material that simulates the fabric component of the torso. In this example, the molds are created by 3D printing with a single parting plane and Ecoflex 00-30 silicone is used as the flexible material. After the silicone hardens, the mold is opened and the composite torso is removed from the mold.

To determine the mechanical parameters of internal organs, cadavers of three freshly ethically killed white laboratory rabbits with an average weight of 5,0 kg (range 4,0-5,8 kg) were used. Immediately after killing, the following internal organs were removed by a team of surgeons: spleen, liver, pancreas, kidneys, diaphragm, small intestine, large intestine, stomach, lungs, duodenum, esophagus, and trachea.

All internal organs were processed and analyzed immediately after removal from the cadaver in order to preserve their mechanical parameters and rheological properties. In this example, the parameters and properties were analyzed on a Texture Analyser TA-2Xi (Godalming) machine, determining the compressive modulus of elasticity for the spleen, liver, pancreas, lungs, kidneys, and the tensile modulus of elasticity for the diaphragm, duodenum, small intestine, large intestine, stomach, esophagus, and trachea. The mechanical parameters, compressive modulus or Young's modulus in tension, maximum stress and elongation at break (in tension) or percentage compression were evaluated.

The measured results are:

| Organ-tissue | Modulus (kPa) | Max stress (kPa) | % of enlogation-compression |
|---|---|---|---|
| Kidney | 340 | 308 | 81 |
| Pancreas | 36 | 136 | 88 |
| Liver | 113 | 135 | 81 |
| Lungs | 15 | 454 | 93 |
| Spleen | 19 | 223 | - |
| Duodenum | 160 | 87 | 47 |
| Diaphragm | 111 | 85 | 69 |
| Large intestine | 35 | 25 | 54 |
| Esophagus | 220 | 102 | 158 |
| Small intestine | 178 | 118 | 52 |
| Trachea | 207 | 140 | 29 |
| Stomach | 58 | 39 | 62 |

The mechanical parameters thus determined are used in the selection of materials for individual internal organs 2. In this example, gelatin methacryloyl (GelMA) and polyacrylamide (PAam) hydrogel were used.

In the procedure of this example, gelatin methacryloyl (GelMA) was prepared in three realizations - 5%, 10% and 20% (w/v). During the preparation, the photoinitiator LAP, lithium phenyl-2,4,6-trimethylbenzoylphosphinate, which can be activated by UV light or blue light, was added. The photoinitiator was added to distilled water at 60 °C to achieve a final initiator concentration of 0,5% (w/v) with thorough mixing until completely dissolved. Then, lyophilized GelMA macromere (weight/volume (w/v) in triplicates of 5%, 10% and 20%) was added to the solution and kept at 40 °C for approximately one hour to obtain a homogeneous GelMA solution. The solution was subsequently cross-linked with UV light (395 nm - 405 nm, 5 W) for approximately two minutes of illumination. This procedure produced three graded versions of the first material for casting internal organs 2. Measurements verified that the compressive modulus of elasticity corresponded to the required properties as follows: $5 % GelMA = 35 , 65 \pm 3 , 13 kPa$ $10 % GelMA = 116 , 11 \pm 5 , 23 kPa$ $20 % GelMA = 370 , 18 \pm 7 , 04 kPa .$

The 5% GelMA material is suitable for the preparation of the pancreas and colon, the 10% GelMA material is suitable for the preparation of the liver and diaphragm.

Polyacrylamide (PAam) hydrogels in the procedure according to this example were prepared by radical polymerization of the monomer Aam (Merck) in water in the presence of the crosslinker MBA (Merck, > 99%), the catalyst TEMED (VWR International, > 99%) and the initiator APS (VWR International, > 98% ACS).

The compositions of the reaction mixtures are given in the following table:

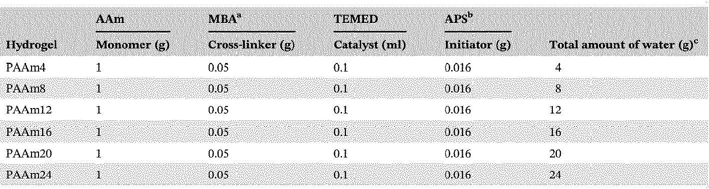

The content of the reactants was unchanged, the designs differed in the amount of water in the reaction mixture, which was used to prepare the resulting hydrogels (PAAm4, PAAm8, PAAm12, PAAm16, PAAm20 and PAAm24). The individual components were added to the reaction mixture at room temperature and at fresh air. The monomer Aam was first dissolved in water, then they were added to the reaction vessel with a solution of the crosslinker MBA and the catalyst TEMED. After each step, the reaction mixture was carefully mixed to achieve a homogeneous state. Finally, a stock solution of the initiator APS was added. The reaction mixture was carefully mixed again and carefully poured into the prepared mold through a larger opening. After 24 hours, the cast internal organ 2 was removed from the mold and repeatedly washed in distilled water to remove residual reactants. After washing, the PAam hydrogels were left in distilled water to swell to the final steady state.

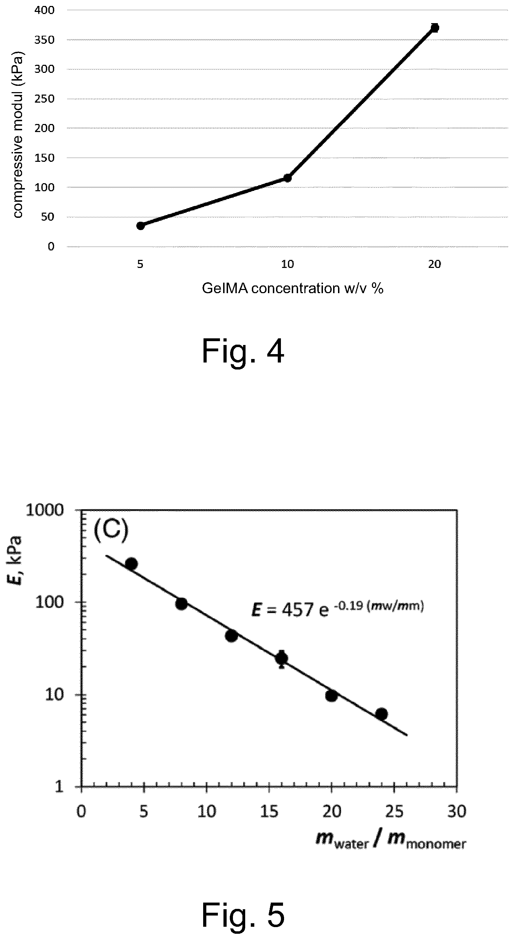

As can be seen from the graph in figure 5, the compressive modulus of elasticity decreases linearly, together with the water content of the cross-linked hydrogel. By extrapolating these properties, a material with precisely the desired mechanical properties can be prepared. A polyacrylamide hydrogel material with, for example, 20% water is suitable for the lung and spleen, with 8% water it is suitable for the liver, and with 5% water it is suitable for the kidney.

Internal organs 2 are inserted in precise anatomical positions into a newborn torso printed using a combination of FDM (Fused Deposit Modeling) 3D printer and silicone casting. This creates a newborn torso with internal organs 2 that are in precise anatomical positions and behave similarly to the real body and organs of a pediatric patient during training.

### Example 2

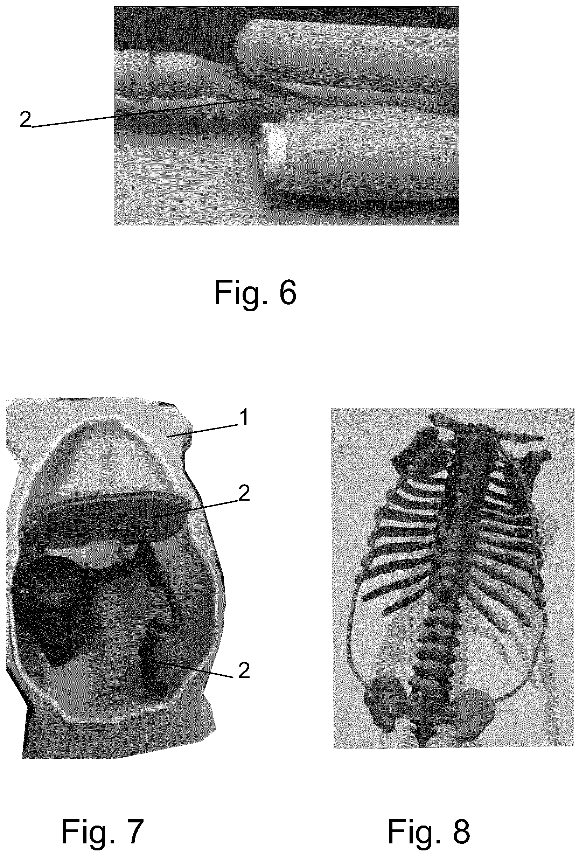

In this example, pursuant to figure 6, a model of a newborn body is created to simulate the congenital developmental defect of duodenal atresia. The model placed in the simulator allows for practicing a surgical procedure with a high degree of similarity to the actual conditions of an operation performed on a pediatric patient.

Duodenal atresia (DA) is a defect in which the duodenum becomes obstructed. It is a relatively rare congenital anomaly. The general estimated incidence of DA is approximately 1 in 5.000 to 10.000 live births. A newborn with DA must undergo surgery or it will not survive. The traditional method of surgery is an open approach, in which the abdominal cavity is opened widely by laparotomy. MIS allows the newborn to be operated on through only 3 mm skin holes, and the surgeon then operates while looking at a screen, while manipulating 3 mm instruments in the abdominal cavity. The MIS approach is technically demanding and cannot be performed safely without advanced skills and training. The procedure and model according to the present invention allow the simulation of a specific pathology and the practice of its surgical removal.

The DA pathology is segmented on a real body of a child patient using the 3DSlicer software. The resulting 3D model file is then edited in Blender3D programme. A negative model is created from this data as a casting mold. The mold can be created on a 3D printer. Silicone with suitable mechanical properties is then poured into the printed mold. After the molds are removed and the silicone has hardened, the cast DA pathology is inserted into the torso 1 of a newborn model.

### Example 3

In addition to casting in a mold, the internal organ 2 can also be created by 3D printing, for example using 3D bioprinting, in which bioinks are used. In another process, the internal organs 2 can be made by 3D MEX printing on silicone or polyurethane materials with different hardness, for example RTV2 silicone with a hardness of 5 shA to 40 shA (45 sh00 to 86 sh00) or on polyurethane with a hardness of 50shA to 85 shA. The internal organs 2 can also be created by FDM/FFF 3D printing of elastic filaments based on thermoplastic elastomers or polyurethanes, the hardness of which ranges from ShoreD in the range 30-80, or ShoreA in the range of 60-90.

This example describes the casting process of internal organ 2, which, thanks to the choice of scalable material, allows for the creation of a faithful model of internal organ 2 and, after the mold is made, represents a fast and efficient method of producing even a larger number of pieces.

In this example, the casting mold is produced by FDM/FFF 3D printing. During the design, an envelope object is generated that is at least 3 mm larger than the cast internal organ 2 on each side, and the .stl file of the respective internal organ is inserted into it as a negative volume. Two hollow cylinders are inserted into the envelope object from above, where the cylinder with a larger diameter (for example 3 mm) is intended for pouring the polymer (inlet opening) and the cylinder with a smaller diameter (for example 1 mm) is intended for venting the mold cavity. These openings can also be produced subsequently by drilling into the mold. When designing the mold, a dividing plane is selected; usually one dividing plane is sufficient, which divides the mold into two parts so that it can be disassembled and the cast internal organ 2 can be removed from the mold without damage. The mold design is used to control CNC machining or to control additive printing as in this example, where the mold is printed from PLA or PETG or any similar filament. In principle, the mold can also be made by other methods, e.g. milling, pressing, etc., but the combination of 3D printing the mold and then casting the internal organs into the mold is efficient.

The mold may include conventional means for maintaining position, such as fixation pins, or it may also include ejectors, or it may be multiple for casting a group of different internal organs from the same realization of the material.

The finished mold is assembled or fixed with clamps. The polymer is dosed through the larger opening until it starts to extrude through the smaller opening. Dosing can be done by pouring (from a beaker) or by spraying (from a syringe or sprayer). The material is then irradiated with UV light through the opening for the required time or allowed to harden for the required time at room temperature or in an oven at an increased temperature. It is recommended to spray the mold with a release agent (separation agent), e.g. silicone or Teflon preparation or oil for easier release from the mold. After opening the mold, the cast internal organ 2 is gently removed and, if necessary, its surface is treated by cutting or grinding. The internal organ 2 is then placed in the torso 1.

### Example 4

The simulator uses a model of a newborn body as described above or as described in any of the previous examples. The simulator is equipped with a 5 mm diameter camera that is USB-connectable to a screen or a PC. The simulator also includes instruments 20 cm long and 3 mm wide that are used in newborn (neonatal) surgery. The simulator in this example also includes an educational video with real MIS operations on a newborn, as well as the surgical procedure on the simulator. Port insertion inputs are created on the newborn's torso (for example, they are printed on a 3D printer). The inputs are color-coded for each type of training on the simulator.

The training material includes video + e-learning materials for MIS training. The torso 1 contains internal organs 2 on which doctors and students train all necessary MIS skills, such as working with a camera, inserting instruments, inserting a needle, suturing. The video and e-learning materials describe the training procedures in detail. The simulator may also include pathologies of selected congenital defects, which are inserted into the model in the appropriate place after opening the torso 1. Usually, a previous model of the relevant internal organ 2 is selected and the internal organ 2 with the pathology, the surgical removal of which is to be practiced, is inserted. The internal organs 2 are attached to the torso 1 with magnets (for example, magnetic strips) to the inside of the torso of the newborn model. The attachment is strong enough so that they do not come off or move from their physiological position when manipulating the internal organs 2.

Internal organs 2, such as intestines, liver, spleen, pancreas, kidneys, can be attached by a silicone membrane and/or a synthetic vascular sling to the root of the synthetic panel (similar to a real newborn, the part called the radix mesenterii).

The training of basic and advanced surgical skills on the simulator according to this example is as follows: camera orientation in the abdominal/thoracic cavity, exploration of the abdominal cavity, needle manipulation, work with instruments, basic and advanced surgical techniques: incision, dissection, loading of individual sutures, continuous suture, sliding knot. The model can then be removed from the simulator and the internal organs 2 from the torso 1 and the surgeon himself or his superior will evaluate the surgeon's skills and the results achieved. Subsequently, the training can continue on a new version of the internal organ 2, or the physiological internal organ 2 can be replaced by an internal organ 2 with pathology.

### Example 5

The simulator uses a model of a newborn body as described in the description, or as described in any of the previous examples. The simulator is equipped with acceleration sensors that are mounted on the ends of the instruments and the motion data from these sensors are processed into a form of course of instrument movements. The sensors evaluate the movement of the hands in the simulator and the movement of the tip of the instrument inside the model. AI is used to assess the skill level of the surgeon. An analysis of the movements of an individual and also of groups of surgeons is also created from the data. This will allow the supervisor, trainer, or trainers responsible for granting specialization in the field of surgery/pediatric surgery, to assess whether the surgeon meets the criteria for basic or advanced surgical skills.

### Industrial applicability

The industrial applicability is obvious. According to the present invention, it is possible to industrially and repeatedly produce and use models of the newborn body and simulators with a model that corresponds in a large degree to a real child's body.

### List of symbols

- 1 -: torso
- 2 -: internal organ

## Claims

1. A model of a newborn body, mainly for a medical training in a minimally invasive surgery, which has a torso (1) and internal organs (2), where the torso (1) includes a first component from a solid material cast into a second component from a flexible material, whereby inside the torso (1) there are multiple internal organs (2) in an anatomical position, where the torso (1) has a size and shape as a torso of a newborn, the internal organs (2) have a size and shape as internal organs of the newborn, the first component has a size and shape as bones of the newborn, **is characterized by the fact, that** the internal organs (2) are produced from the flexible material whose compressive modulus of elasticity and tensile strength limit correspond to a mechanical features of the respective organ in the newborn's body.

2. The model of the newborn body, mainly for the medical training in the minimally invasive surgery, according to the claim 1, **is characterized by the fact, that** the inside the torso (1) there are all the internal organs (2) of thoracic and abdominal cavities in the anatomical position.

3. The model of the newborn body, mainly for the medical training in the minimally invasive surgery, according to the claim 1 or 2, **is characterized by the fact, that** mechanical parameters of the internal organs (2) and/or the torso (1) correspond to real internal organs and/or to a real torso of a child's body with a margin of error up to 80%, preferably up to 50%, especially preferably up to 25%.

4. The model of the newborn body, mainly for the medical training in the minimally invasive surgery, according to the claim 3, **is characterized by the fact, that** the mechanical parameter is the compressive modulus of elasticity and/or the tensile strength limit and/or a tensile modulus of elasticity and/or a relative elongation at tensile strength limit and/or a viscosity of a material and/or a shear modulus and/or a bulk modulus and/or a coefficient of friction in a static state and/or in motion.

5. The model of the newborn body, mainly for the medical training in the minimally invasive surgery, according to the claim 3 or 4, **is characterized by the fact, that** the mechanical parameter is set pursuant to a value measured on a torso and/or an internal organ of an animal, preferably a rabbit weighing from 3,5 kg to 6 kg.

6. The model of the newborn body, mainly for the medical training in the minimally invasive surgery, according to any of the claims 1 to 5, **is characterized by the fact, that** the internal organ (2) is a cast of gelatin methacryloyl or of polyacrylamide hydrogel.

7. The model of the newborn body, mainly for the medical training in the minimally invasive surgery, according to any of the claims 1 to 6, **is characterized by the fact, that** it includes the internal organ (2) with a simulation of a congenital defect.

8. The model of the newborn body, mainly for the medical training in the minimally invasive surgery, according to any of the claims 1 to 7, **is characterized by the fact, that** the internal organ (2) and/or the torso (1) have shape and size pursuant to a scan of the newborn's body, preferably the scan using a computed tomography.

9. The model of the newborn body, mainly for the medical training in the minimally invasive surgery, according to any of the claims 1 to 8, **is characterized by the fact, that** the internal organ (2) and/or the torso (1) have shape and size according to the scan of the newborn's body with a simulated capnoperitoneum and/or the torso (1) is adapted to create a gas overpressure.

10. The model of the newborn body, mainly for the medical training in the minimally invasive surgery, according to any of the claims 1 to 9, **is characterized by the fact, that** the torso (1) has an input or multiple inputs for an insertion of ports (work instruments).

11. The model of the newborn body, mainly for the medical training in the minimally invasive surgery, according to any of the claims 1 to 10, **is characterized by the fact, that** the internal organs (2) are equipped with a magnetic element to connect them with the neighboring internal organ (2) and/or with the torso (1).

12. The model of the newborn body, mainly for the medical training in the minimally invasive surgery, according to any of the claims 1 to 11, **is characterized by the fact, that** the internal organs (2) are connected in the torso (1) by a silicone membrane and/or a synthetic vascular sling.

13. A simulator for the medical training in an invasive surgery, mainly the minimally invasive surgery, which includes the model of the newborn body according to any of the claims 1 to 12, **is characterized by the fact, that** it has instruments for performing an operation inside the model.

14. The simulator for the medical training in the invasive surgery, mainly the minimally invasive surgery, according to the claim 13, **is characterized by the fact, that** it has at least one sensor for sensing a movement and/or a course and/or an acceleration of the instrument.

15. A method of a preparation of the model of the newborn body, according to any of the claims 1 to 11, **is characterized by the fact, that** the mechanical parameters of the actual internal organs are determined by measuring samples, the size and the shape of the torso and internal organs are determined by scanning, then the composite torso (1) is manufactured with a skeletal component made of the solid material which is cast into the flexible material, and the internal organs (2) are placed inside the torso (1), the mechanical parameters of which are adjusted by mixing components of the material to achieve values according to measurements of the actual organs, preferably the mechanical parameters are gathered on the actual internal organs of the animal.
